## Europäisches Patentamt

## European Patent Office

## Office européen des brevets

(11) Veröffentlichungsnummer: **0 378 812**
A1

# (12) EUROPÄISCHE PATENTANMELDUNG

(21) Anmeldenummer: **89123124.3**

(22) Anmeldetag: **14.12.89**

(51) Int. Cl.⁵: **H01M 8/12, H01M 8/24**

(30) Priorität: **18.01.89 CH 156/89**

(43) Veröffentlichungstag der Anmeldung:
**25.07.90 Patentblatt 90/30**

(84) Benannte Vertragsstaaten:
**CH DE FR GB IT LI NL SE**

(71) Anmelder: **ASEA BROWN BOVERI AG**
**Haselstrasse**
**CH-5401 Baden(CH)**

(72) Erfinder: **Bossel, Ulf, Dr.**
**Baldeggstrasse 13**
**CH-5400 Baden(CH)**

(54) **Anordnung von Brennstoffzellen auf der Basis eines Hochtemperatur-Feststoffelektrolyten aus stabilisiertem Zirkonoxyd zur Erzielung höchsmöglicher Leistung.**

(57) Anordnung von Brennstoffzellen auf der Basis eines Hochtemperatur-Feststoffelektrolyten (1) aus stabilisiertem $ZrO_2$ zur Erzielung höchstmöglicher Leistung auf kleinstem Raum durch elektrische Serieschaltung und mechanische Stapelung einer Vielzahl von flachen, ebenen plattenförmigen Brennstoffzellen (1;2;3) nach dem Filterpresse-Prinzip, wobei jeweils die Sauerstoffelektrode (2) der einen Brennstoffzelle mit der Brennstoffelektrode (3) der nächstfolgenden Brennstoffzelle durch ein elektrisch leitendes Element (4) verbunden ist, welches Strömungskanäle für die gasförmigen Medien enthält. Ausführung der elektrisch leitenden Elemente als mit Erhebungen (11) versehene Bipolarplatte (4). Kreuzstromprinzip. Schachbrettartige Anordnung mehrerer Brennstoffzellen-Stapel (33) nebeneinander: Beste Raumausnutzung, höchste Leistungsdichte.

FIG.10

FIG.12

EP 0 378 812 A1

# Anordnung von Brennstoffzellen auf der Basis eines Hochtemperatur-Feststoffelektrolyten aus stabilisiertem Zirkonoxyd zur Erzielung höchstmöglicher Leistung

## Technisches Gebiet:

Hochtemperatur-Brennstoffzellen zur Umwandlung von chemischer Energie in elektrische Energie. Die elektrochemische Energieumwandlung und die hierzu benötigten Vorrichtungen gewinnen dank ihres guten Wirkungsgrades gegenüber anderen Umwandlungsarten an Bedeutung.

Die Erfindung bezieht sich auf die Weiterentwicklung der elektrochemischen Hochtemperatur-Zellen unter Verwendung von keramischen Feststoffelektrolyten als Ionenleiter, wobei die Zellen weitgehend unabhängig vom verwendeten Brennstoff sein sollen und eine raumsparende Anordnung gewähren sollen.

Insbesondere betrifft sie eine Anordnung von Brennstoffzellen auf der Basis eines Hochtemperatur-Feststoffelektrolyten aus stabilisiertem Zirkonoxyd zur Erzielung höchstmöglicher Leistung auf kleinstem Raum.

## Stand der Technik:

Hochtemperatur-Brennstoffzellen mit keramischem Feststoffelektrolyt sind aus zahlreichen Veröffentlichungen bekannt. Die eigentlichen Elemente für derartige Zellen können die verschiedensten Formen und Abmessungen aufweisen. Um die ohmschen Spannungsverluste klein zu halten, wird allenthalben versucht, die Dicke der Elektrolytschicht möglichst niedrig zu halten. Form und Abmessungen der Elemente richten sich zudem nach der Forderung der Möglichkeit der elektrischen Serieschaltung einer Vielzahl von Zellen, um auf die nötige Klemmenspannung zu kommen und die Ströme vergleichsweise niedrig zu halten. Es gibt Elemente in Form von :
- Zylindrischen Röhren (Westinghouse),
- Konischen Röhren, ähnlich "Schachtelhalm" (Dornier)
- Trapezförmigen Wellen (Argonne)
- Kreisförmigen Platten (ZTEK).

Bei der Entwicklung von Brennstoffzellen mit keramischem Feststoffelektrolyt hat man sich bisher fast nur mit der Verbesserung und Verbilligung der keramischen Bauteile in Form von röhrenförmigen Brennstoffzellen-Elementen befasst. Ueber geeignete Anordnungen zur möglichst optimalen Raumausnutzung und der Erzielung hoher Spannungen durch geeignete, für die Serieschaltung der einzelnen Zellen vorteilhafte Konfigurationen finden sich praktisch keine Hinweise.

Zum Stand der Technik werden die nachfolgenden Druckschriften genannt:
- O.Antonsen, W.Baukal und W.Fischer, "Hochtemperatur-Brennstoffbatterie mit keramischem Elektrolyten", Brown Boveri Mitteilungen Januar/Februar 1966, Seiten 21-30,
- US-A-4692274
- US-A-4395468
- W.J Dollard und W.G.Parker, "An overview of the Westinghouse Electric Corporation solid oxide fuel cell program", Extended Abstracts, Fuel Cell Technology and Applications, International Seminar, Den Haag, Niederlande, 26.bis 29.Oktober, 1987.
- F. J.Rohr, High-Temperature Fuel Cells, Solid Electrolytes, 1978 by Academic Press, Inc., Seite 431 ff.
- D.C.Fee et al., Monolithic Fuel Cell Development, Argonne National Laboratory, Paper presented at the 1986 Fuel Cell Seminar, Oct. 26 - 29, 1986, Tucson, AZ, U. S.Department of Energy, The University of Chicago.

Die bekannten, für Brennstoffzellen verwendeten Grundelemente zeichnen sich meistens durch eine vergleichsweise komplizierte Geometrie aus, die den Bau von kompakten, raumsparenden Anlagen erschwert. Ausserdem ist entsprechend den vorgeschlagenen Formen eine rationelle Fertigung im grosstechnischen Massstab kaum möglich. Insbesondere fehlt eine für eine optimale Serieschaltung der Einzelzellen brauchbare Konfiguration, die sich mit einfachen Fabrikationsmitteln realisieren lässt.

Es besteht daher ein grosses Bedürfnis nach Weiterentwicklung, Vereinfachung und Rationalisierung des Aufbaus und der Herstellung von Grund-Bauelementen und deren optimale gegenseitige Anordnung basierend auf keramischen Hochtemperatur-Brennstoffzellen.

## Darstellung der Erfindung:

Der Erfindung liegt die Aufgabe zugrunde, eine Anordnung von Brennstoffzellen auf der Basis eines Hochtemperatur-Feststoffelektrolyten aus stabilisiertem Zirkonoxyd anzugeben, die auf kleinstem Raum die höchstmögliche Leistung erzielt, eine einwandfreie Serieschaltung einer Vielzahl von Brennstoffzellen und einen guten Stromübergang zwischen benachbarten Zellen bei geringsten Verlusten gewährleistet und ein blockweises Zusammenstellen zu grossen Leistungseinheiten ermöglicht. Der Aufbau und die Anordnung der Brennstoffzellen und der übrigen Bauelemente soll eine rationelle grosstechnische Herstellung gewährlei-

2

sten.

Diese Aufgabe wird' dadurch gelöst, dass in der eingangs erwähnten Anordnung von Brennstoffzellen mehrere, je aus einem ebenen, flachen Blatt bestehende Brennstoffzellen-Elemente stapelartig aufeinandergeschichtet und elektrisch in Serie geschaltet sind, dergestalt, dass jeweils die Sauerstoffelektrode des einen Elements mit der Brennstoffelektrode des nächstfolgenden Elements durch ein elektrisch leitendes Bauelement verbunden ist.

**Weg zur Ausführung der Erfindung:**

Die Erfindung wird anhand der durch Figuren näher erläuterten Ausführungsbeispiele beschrieben

Dabei zeigt:

Fig.1 einen Schnitt durch eine Anordnung von Brennstoffzellen und Bipolarplatten,

Fig.2 einen Schnitt durch eine schematische Darstellung einer Bipolarplatte,

Fig.3 einen Schnitt durch eine metallische Bipolarplatte mit Nieten,

Fig.4 einen Schnitt durch eine als Presskörper ausgebildete, metallische Bipolarplatte,

Fig.5 einen Schnitt durch eine aus Blechen bestehende metallische Bipolarplatte,

Fig.6 einen Schnitt durch eine als Presskörper ausgebildete Bipolarplatte aus einem keramischen oder einem Cermet-Verbundwerkstoff,

Fig.7 einen Schnitt durch eine als Presskörper aus einem keramischen Werkstoff bestehende Bipolarplatte mit einer einseitigen Oberflächenschutzschicht,

Fig.8 einen Schnitt durch eine als Verbundkörper aus einem Blech und einem aufgepressten keramischen Werkstoff bestehende Bipolarplatte,

Fig.9 eine perspektivische Darstellung einer Bipolarplatte mit seitlicher Begrenzung,

Fig.10 eine perspektivische Darstellung eines Stapels aus einer Vielzahl von Brennstoffzellen und Bipolarplatten mit zugehörigen Führungen und Kanälen der gasförmigen Medien,

Fig.11 einen Grundriss (Draufsicht) einer Anordnung einer Vielzahl von quadratischen Brennstoffzellen-Stapeln mit zugehörigen Führungen der gasförmigen Medien,

Fig.12 einen Grundriss (Draufsicht) einer Anordnung einer Vielzahl von achteckigen Brennstoffzellen-Stapeln mit zugehörigen Führungen der gasförmigen Medien.

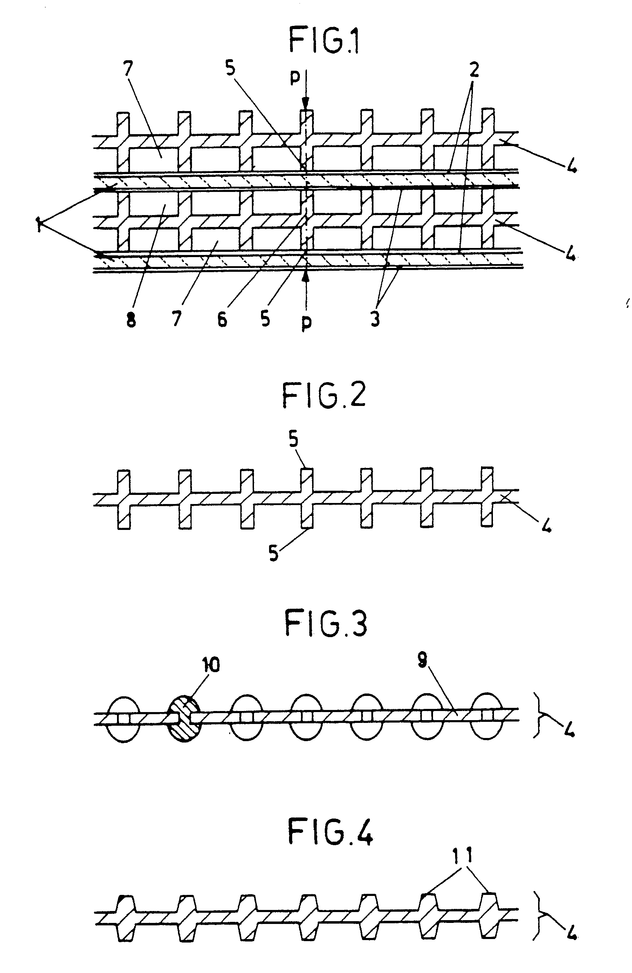

In Fig.1 ist ein Schnitt durch eine Anordnung von Brennstoffzellen und Bipolarplatten dargestellt. 1 ist der keramische Feststoffelektrolyt, in vorliegendem Fall in Form von dotiertem, stabilisiertem $ZrO_2$. 2 ist die poröse (positive) Sauerstoffelektrode aus zum Beispiel La/Mn-Perowskit, 3 die poröse (negative) Brennstoffelektrode aus zum Beispiel Ni/$ZrO_2$-Cermet. 4 ist die Bipolarplatte, welche die elektrische Stromleitung zwischen der Sauerstoffelektrode 2 einer Brennstoffzelle und der Brennstoffelektrode 3 der nächstfolgenden Brennstoffzelle gewährleistet. Gleichzeitig stellt sie das kraftschlüssige mechanische Bindeglied der gesamten, nach dem Filterpressprinzip aufgebauten Stapel einer Vielzahl in Serie geschalteter Brennstoffzellen dar. Der axiale Druck p eines derartigen Stapels wird über die Druckpunkte (bzw. Drucklinien) 5 auf die benachbarten Elektroden übertragen. Die mit entsprechenden Erhebungen versehenen Bipolarplatten 4 sind derart angeordnet, dass die Wirkungslinien (bzw. Wirkungsebenen) der Druckkräfte durch den ganzen Stapel in einer Flucht liegen. Es werden daher nur Druckkräfte ausgeübt. Die Bipolarplatte 4 wird nicht auf zusätzliche Biegung oder Scherung beansprucht. Dadurch wird die Gefahr des Anreissens oder Brechens der Bipolarplatten sowie des betrieblichen Nachlassens des Kontaktdruckes p auf die Elektrodenflächen auf ein Minimum herabgesetzt. Durch die Bipolarplatte 4 und die benachbarten Elektroden 2 bzw. 3 werden die Kanäle 7 für gasförmige Sauerstoffträger (Luft) bzw. 8 für gasförmigen Brennstoff ($CH_4$) gebildet.

Fig.2 bezieht sich auf einen Schnitt durch eine schematische Darstellung einer einzelnen Bipolarplatte, welche deren prinzipiellen Aufbau erkennen lässt. Die Bipolarplatte 4 besteht aus dem eigentlichen plattenförmigen ebenen Körper, der beidseitig mit Erhebungen (Noppen, Rippen) zur Ausübung eines erhöhten Druckes an den Kontaktstellen zu den anliegenden benachbarten Elektroden ausgerüstet ist. Druckpunkt (bzw. Drucklinie) 5!

Fig.3 zeigt einen Schnitt durch eine metallische Bipolarplatte mit Nieten. Die Bipolarplatte 4 besteht im vorliegenden Fall aus einem flachen, ebenen Blech 9, welches mit Nieten 10 versehen ist, deren Rundköpfe beiderseits vorkragen. Als Materialien kommen Hochtemperaturwerkstoffe wie Nickel- oder Platinmetall-Legierungen in Frage.

In Fig.4 ist ein Schnitt durch eine als Presskörper ausgebildete metallische Bipolarplatte dargestellt. Die Bipolarplatte 4 besteht aus einem flachen ebenen Mittelteil und Noppen (bzw.Leisten oder Rippen) 11, welche ein monolithisches Ganzes bilden. Der Presskörper kann aus einem Blech durch Walzen, Pressen etc. oder nach pulvermetallurgischen Methoden gefertigt sein.

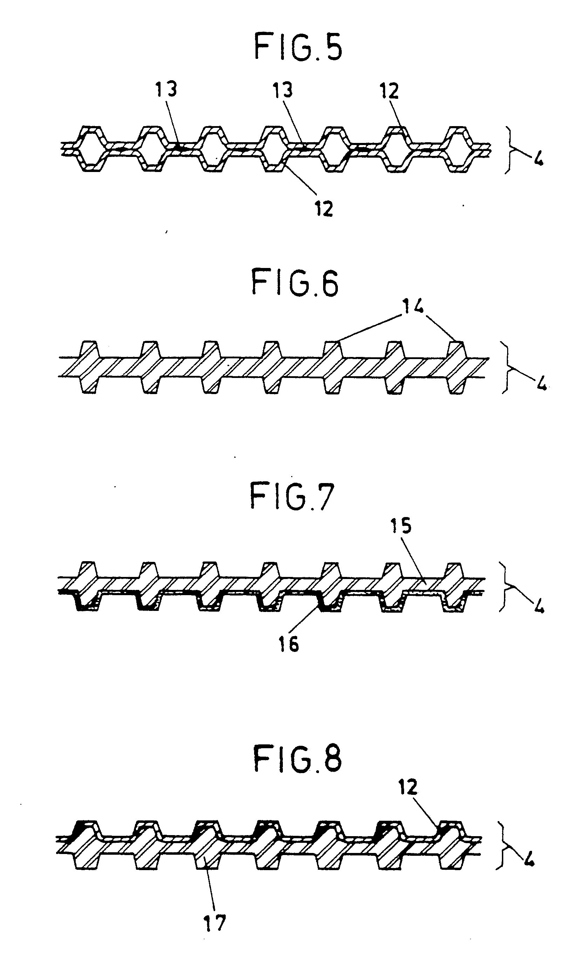

In Fig.5 ist ein Schnitt durch eine aus Blechen bestehende metallische Bipolarplatte dargestellt. Die Bipolarplatte 4 besteht in vorliegendem Fall aus zwei symmetrischen, mit Noppen oder Rippen versehenen, aufeinandergelegten und fest miteinander verschweissten Blechen 12. Die Schweissungen 13 sind durch schwarze linsenförmige Punkte im Schnitt dargestellt: Punkt- bzw. Nahtschweissung !

Fig.6 zeigt einen Schnitt durch eine als Presskörper ausgebildete Bipolarplatte aus einem keramischen oder einem Cermet-Verbundwerkstoff. Der zentrale, plattenförmige Körper bildet mit den Noppen oder Leisten (Rippen) 14 ein monolithisches Ganzes. Die Bipolarplatte 4 hat grundsätzlich die gleiche Form wie in Fig.4, wobei jedoch der zentrale Teil etwas kräftiger ausgeführt wird. Die Herstellung erfolgt nach den der Pulvermetallurgie verwandten Methoden der Keramik.

Fig.7 bezieht sich auf einen Schnitt durch eine als Presskörper aus einem keramischen Werkstoff bestehende Bipolarplatte mit einer einseitigen Oberflächenschutzschicht. Der mit Noppen oder Rippen versehene Presskörper 15 entspricht weitgehend demjenigen der Fig.6. Die eine Seite des Presskörpers 15 - bevorzugterweise die Sauerstoffseite - ist mit einer Oberflächenschutzschicht 16 versehen. Im vorliegenden Fall handelt es sich beispielsweise um eine oxydationsbeständige Oberflächenschutzschicht aus einem elektrisch leitenden La/Mn-Perowskit (gleiches oder ähnliches Material wie die Sauerstoffelektrode 2). Die Beschichtung erfolgt durch Sprühen, Spritzen, Tauchen, Bepinseln, Aufwalzen einer grünen Folie oder nach pulvermetallurgischen Methoden

Fig.8 stellt einen Schnitt durch eine als Verbundkörper aus einem Blech und einem aufgepressten keramischen Werkstoff bestehende Bipolarplatte dar. Das mit Noppen oder Rippen versehene Blech 12 ist einseitig mit einem ebenfalls mit symmetrisch angeordneten Noppen oder Rippen versehenen Körper 17 aus einem keramischen Material belegt. Dieser Körper 17 wird auf das Blech 12 auf- bzw. in seine Vertiefungen eingepresst und besteht vorzugsweise aus einem elektrisch leitenden, oxydationsbeständigen keramischen Stoff, beispielsweise aus La/Mn-Perowskit. Die Fertigung erfolgt nach den üblichen Methoden der Keramik und der Pulvermetallurgie.

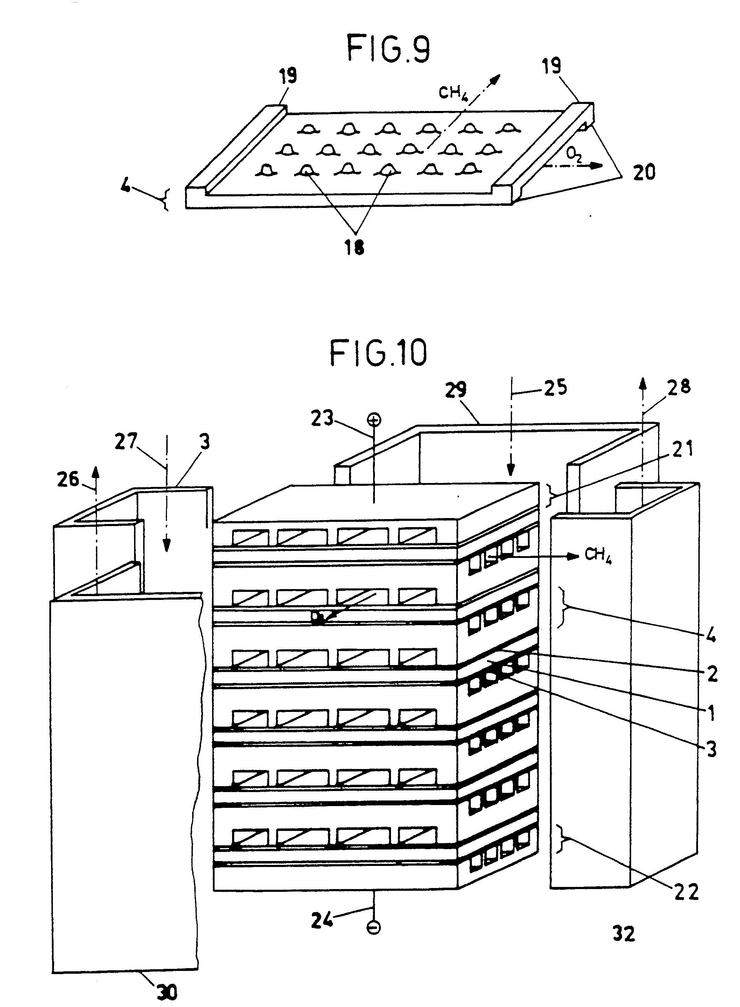

Fig. 9 zeigt eine perspektivische Darstellung einer Bipolarplatte mit seitlicher Begrenzung. Die aus einem metallischen oder keramischen Werkstoff oder einem Cermet bestehende Bipolarplatte 4 weist auf ihrer Ober- wie auf ihrer Unterseite (nicht sichtbar) Noppen 18 auf. Auf ihrer Oberseite (Brennstoffseite) weist die Bipolarplatte an ihrem linken und rechten Rand je eine von vorne nach hinten verlaufende seitliche Begrenzungsleiste 19 auf. Auf ihrer Unterseite (Sauerstoffseite) ist sie am vorderen und hinteren Rand mit je einer von links nach rechts verlaufenden seitlichen Begrenzungsleiste 20 ausgerüstet. Die Längsrichtungen der Begrenzungsleisten 19 und 20 stehen also senkrecht aufeinander, was auch den Strömungsrichtungen der gasförmigen Medien entspricht. Dies ist durch die Pfeile für $O_2$ (Sauerstoffseite) und $CH_4$ -

(Brennstoffseite) angedeutet. Es handelt sich somit um das Kreuzstromprinzip.

Fig.10 bezieht sich auf eine perspektivische Darstellung eines Stapels aus einer Vielzahl von Brennstoffzellen und Bipolarplatten mit zugehörigen Führungen und Kanälen der gasförmigen Medien. 21 ist die sauerstoffseitige Endplatte, welche den positiven Pol des Stapels der Brennstoffzellen 4 darstellt. 22 ist die brennstoffseitige Endplatte (negativer Pol). 1 ist der Feststoffelektrolyt, 2 die Sauerstoffelektrode und 3 die Brennstoffelektrode. 23 ist schematisch die elektrische Leitung zur positiven, 24 diejenige zur negativen Klemme. Der Pfeil 25 ist die Zuführung des gasförmigen Sauerstoffträgers (beispielsweise Luft), der Pfeil 26 die entsprechende Abführung des Ueberschusses des letzteren und der Ballaststoffe (im vorliegenden Fall Stickstoff). Der Pfeil 27 stellt die Zuführung des gasförmigen Brennstoffes (beispielsweise $CH_4$), der Pfeil 28 die entsprechende Abführung des Ueberschusses des Brennstoffes und der gasförmigen Reaktionsprodukte ($CO_2$; $H_2O$) dar. Die Zu- und Abfuhr der gasförmigen Medien zum und vom Stapel der Brennstoffzellen 4 erfolgt über entsprechende, seitlich vom Stapel angeordnete Kanäle. 29 ist die (schematische) Kanalwand des Zuführungskanals für den gasförmigen Sauerstoffträger, 30 die entsprechende Kanalwand des Abführungskanals für den $O_2$-Ueberschuss und den Ballast. 31 stellt die Kanalwand des Zuführungskanals für den gasförmigen Brennstoff, 32 die entsprechende Kanalwand des Abführungskanals für den Brennstoffüberschuss und die Reaktionsprodukte dar. Durch die Pfeile $O_2$ und $CH_4$ ist die Strömungsrichtung innerhalb einer Bipolarplatte 4 angedeutet. Das Kreuzstromprinzip ist im ganzen Stapel konsequent verwirklicht. Selbstverständlich kann in Abweichung von Fig.10 die Abführung der gasförmigen Medien auch nach unten (gleichsinnig zum Strom der Zuführung) statt nach oben (gegensinnig zum Strom der Zuführung) erfolgen.

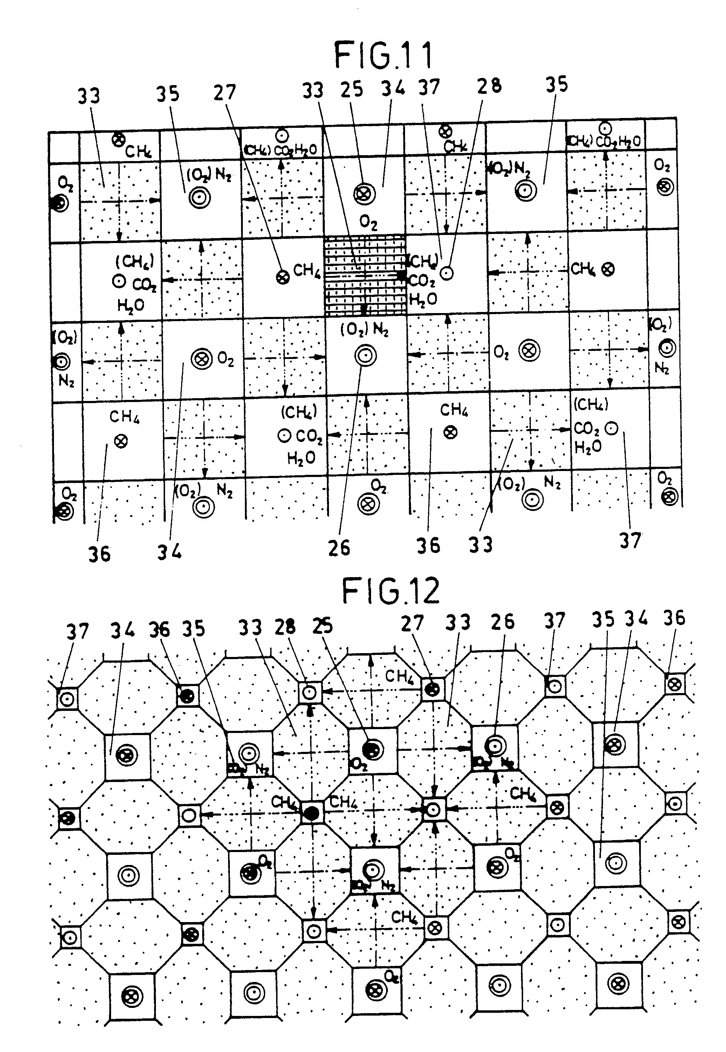

In Fig.11 ist ein Grundriss (Draufsicht) einer Anordnung einer Vielzahl von quadratischen Brennstoffzellen-Stapeln mit zugehörigen Führungen der gasförmigen Medien dargestellt. 33 ist ein Plattenstapel einer Vielzahl von Brennstoffzellen mit Bipolarplatten, im vorliegenden Fall von quadratischem Querschnitt (Grundriss). 34 ist ein durch die schachbrettartige Anordnung der Brennstoffzellen-Stapel im Grundriss bedingter kaminförmiger Zuführungskanal quadratischen Querschnitts für den gasförmigen Sauerstoffträger. 25 ist der entsprechende Vektor der Strömungsrichtung senkrecht zur Zeichnungsebene mit Richtungssinn in diese hinein. 35 ist ein entsprechender kaminförmiger Abführungskanal für den $O_2$-Ueberschuss und den Ballast. 26 ist der entsprechende Vektor der Strömungsrichtung senkrecht zur Zeichnungsebene mit Richtungssinn aus dieser heraus. Die Strömungsrichtung der gasförmigen Medien in der Zeichnungsebene, d.h. innerhalb einer Brennstoffzelle bzw. zwischen Elektrode und Bipolarplatte ist durch Pfeile $O_2$ und $CH_4$ sowie Pfeilspitzen $(O_2)$;$N_2$ und $(CH_4)$; $CO_2$; $H_2O$ dargestellt. In einem Stapel ist die Bipolarplatte im Grundriss und die Strömungsrichtung zwischen entsprechenden Rippen deutlicher hervorgehoben (Kreuzstromprinzip). Dabei strömt im vorliegenden Fall $O_2$ unterhalb, $CH_4$ oberhalb der Bipolarplatte (vom Betrachter aus gesehen). An den äusseren Begrenzungen der gesamten Stapel-Batterie sind Kanäle reduzierten Querschnittes angeordnet, entsprechend dem kleineren Volumenstrom.

In Fig.12 ist ein Grundriss (Draufsicht) einer Anordnung einer Vielzahl von achteckigen Brennstoffzellen-Stapeln mit zugehörigen Führungen der gasförmigen Medien dargestellt. Alle Bezugszeichen entsprechen grundsätzlich denjenigen der Figur 11. Durch eine Verkleinerung der quadratischen Querschnitte der kaminförmigen Kanäle für die gasförmigen Medien auf das strömungstechnisch (aerodynamisch, thermodynamisch) erforderliche notwendige Mass wurde der achteckige Grundriss der Brennstoffzellen und Bipolarplatten bedingt. Da im allgemeinen im vorliegenden Fall der gasförmige Sauerstoffträger (Luft) und der Ballast ($N_2$) einen grösseren Volumenstrom als der gasförmige Brennstoff ($CH_4$) und die Reaktionsprodukte ($CO_2$; $H_2O$) darstellen und zudem für den Sauerstoffträger ein kürzerer, für den Brennstoff dagegen ein längerer Weg in der Brennstoffzelle vorteilhaft ist, ergibt sich für letztere die ungleichseitige Achteckform. Entsprechend haben die kaminförmigen Kanäle der gasförmigen Medien unterschiedlichen Quer schnitt. Die ungleichseitige Achteckform der Brennstoffzellen und der Bipolarplatten erlaubt eine optimale Raumausnutzung des aus einer Vielzahl von Stapeln bestehenden Blocks. Dadurch kann bei gleichzeitig sehr vorteilhafter Thermodynamik mit dieser Bauweise die höchstmögliche Leistungsdichte erzielt werden.

Ausführungsbeispiel 1:

Siehe Fig.3 !

Aus einem metallischen Werkstoff mit hohem Oxydations- und Korrosionswiderstand bei hohen Temperaturen mit dem Handelsnamen "Inconel" wurde eine ebene Bipolarplatte 4 gefertigt. Der Werkstoff hatte folgende Zusammensetzung:
Ni = 80 Gew.-%
Cr = 14 Gew.-%
Fe = 6 Gew.-%

Die Platte war quadratisch, mit 40 mm Seitenlänge und einer Dicke von 0,5 mm. Sie wurde aus einem Blech 9 von 46 mm x 46 mm Seitenlänge gefertigt und an gegenüberliegenden Seiten in einer Richtung nach unten, in der darauf senkrechten Richtung nach oben um 3 mm abgekantet (vgl.Prinzip der Fig.9). Der flache Teil wurde mit Nieten 10 von 2 mm Durchmesser aus dem gleichen Material bestückt, dergestalt, dass deren Achsen in einer zur einen Seite der Platte parallelen Geraden 6 mm Abstand hatten und je zwei benachbarte Nietreihen um den halben Betrag (3 mm) gegeneinander versetzt waren. Die Köpfe der Nieten 10 wurden auf beiden Seiten der Bipolarplatte 4 planparallel geschliffen. Auf der Sauerstoffseite wurde durch Plasmasprühen eine ca. 50 um dicke Schicht aus La/Mn-Perowskit aufgebracht. Ein aus Bipolarplatten 4 und Brennstoffzellen (1,2,3 in Fig.1) bestehender Stapel wurde mit total ca. 7,2 N belastet, so dass die Druckkraft p pro Niete 10 durchschnittlich 0,2 N betrug.

Ausführungsbeispiel 2:

Siehe Fig.4 !

Aus dem gleichen Werkstoff wie in Beispiel 1 wurde eine mit Noppen 11 versehene Bipolarplatte 4 warmgepresst. Die Platte war durchschnittlich 0,6 mm dick und hatte eine Seitenlänge von 60 mm. Die Noppen 11 hatten konische Form mit einem Durchmesser an der Basis von 1,0 mm, am Kopf von 0,6 mm. Ihre totale Höhe über beide Seiten gemessen betrug 2,2 mm. Der Abstand der versetzt angeordneten Noppenreihen betrug 7 mm. Die Noppen 11 wurden beidseitig überschliffen.

Ein aus Bipolarplatten und Brennstoffzellen bestehender Stapel wurde mit 16N senkrecht zur Plattenebene belastet, so dass auf die Noppen eine Einzelkraft von je 0,25 N wirkte.

Ausführungsbeispiel 3:

Siehe Fig. 5 !

Aus einem Blech aus einer Nickelbasislegierung wurden zwei wellenförmige Körper gefertigt. Der Werkstoff mit dem Handelsnamen Nimonic 80A hatte folgende Zusammensetzung:
Cr = 19,5 Gew.-%
Al = 1,4 Gew.-%
Ti = 2,4 Gew.-%
Zr = 0,06 Gew.-%
Mn = 0,30 Gew.-%
Si = 0,30 Gew.-%
B = 0,003 Gew.-%
C = 0,06 Gew.-%
Ni = Rest

Die trapezförmigen Rippen des 0,5 mm dicken Bleches 12 hatten einen Mittenabstand von 6 mm, hatten an der Basis eine Breite von 2,5 mm und am Kopf eine solche von 1,5 mm. Je zwei Bleche 12 mit einer Fläche von 50 mm x 50 mm wurden in symmetrischer Weise aufeinandergelegt und durch eine Nahtschweissung 13 miteinander fest verbunden. Die Rippen der derart gebildeten Bipolarplatte 4 lagen also auf beiden Seiten in einer Flucht, so dass im Betrieb im wesentlichen nur Druckkräfte übertragen wurden. Die Köpfe der Rippen wurden beidseitig plan überschliffen. Die Sauerstoffseite wurde mit einer ca. 40 μm dicken La/Mn-Perowskitschicht versehen.

Ausführungsbeispiel 4:

Siehe Fig. 6 und 7 !

Eine Bipolarplatte 4 mit ähnlichem Aufbau wie unter Beispiel 2 beschrieben wurde aus dem elektrisch leitenden keramischen Werkstoff Siliziumkarbid SiC gepresst und gesintert. Der Presskörper 15 hatte eine Dicke von 0,8 mm und seine totale Höhe über die Noppen 14 gemessen betrug 5,0 mm. Der Abstand der versetzt angeordneten Noppenreihen betrug 8 mm. Die Noppen 14 hatten konische Form mit einem Durchmesser an der Basis von 0,8 mm und am Kopf von 0,6 mm. Die Köpfe der Noppen 14 wurden auf beiden Seiten der Platte plan geschliffen. Dann wurde auf die Sauerstoffseite eine oxydationsbeständige Oberflächenschicht 16 aus La/Mn-Perowskit von 30 μm Dicke durch Plasmasprühen aufgebracht.

Ausführungsbeispiel 5:

Siehe Fig. 8 !

Aus einem Blech aus Nimonic 80A wurde gemäss Beispiel 3 zunächst ein wellenförmiger Körper gefertigt. Die Abmessungen waren die gleichen wie in Beispiel 3. Auf das mit Rippen versehene Blech 12 wurde ein elektrisch leitender, sauerstoffbeständiger keramischer Werkstoff aufgepresst und gesintert. Eswurde in vorliegendem Fall zu diesem Zweck ein La/Mn-Perowskit verwendet. Die totale Dicke der Bipolarplatte 4 im zentralen Teil betrug 1,0 mm, die totale Höhe über die Rippen gemessen 2,3 mm. Nach dem Sintern wurden die Köpfe der Rippen auf beiden Seiten der Bipolarplatte 4 plan geschliffen.

Ausführungsbeispiel 6:

Siehe Fig.7 und 9 !

Gemäss Beispiel 4 wurde aus Siliziumkarbid SiC eine Bipolarplatte 4 gepresst und gesintert. Die Platte war entsprechend Fig.7 beidseitig mit Noppen 18 (Fig.9) versehen. Der Grundriss war quadratisch. Die Seitenlänge betrug 40 mm. Auf der Brennstoffseite waren an zwei gegenüberliegenden Seiten je 3 mm breite Begrenzungsleisten 19 vorgesehen. Die Leisten 19 waren um 40 μm niedriger als der Höhe der Noppen 18 entsprach. Auf der Sauerstoffseite waren an zwei gegenüberliegenden Seiten, jedoch um 90° versetzt ebenfalls je 3 mm breite Begrenzungsleisten 20 vorhanden, die in der Höhe auch 40 μm gegenüber den entsprechenden Noppen zurückstanden.

Die Sauerstoffseite wurde mit einer oxydationsbeständigen Oberflächenschicht 16 von 40 μm Dicke aus La/Mn-Perowskit belegt. Alle Berührungsflächen wurden planparallel überschliffen.

Ausführungsbeispiel 7:

Siehe Fig. 10 !

Aus dem Werkstoff mit der Handelsbezeichnung Nimonic 90, einer warmfesten Nickelbasislegierung, wurden 20 Bipolarplatten 4 und je eine sauerstoffseitige (21) und eine brennstoffseitige (22) Endplatte hergestellt. Die Legierung hatte folgende Zusammensetzung:
Cr = 19,5 Gew.-%
Co = 16,5 Gew.-%
Al = 1,45 Gew.-%
Ti = 2,45 Gew.-%
Zr = 0,06 Gew.-%
Mn = 0,30 Gew.-%
Si = 0,30 Gew.-%
B = 0,003 Gew.-%
C = 0,07 Gew.-%
Ni = Rest

Die Bipolarplatten 4 und die Endplatten 21 und 22 hatten einen quadratischen Grundriss von 100 mm Seitenlänge und wiesen eine durchgehende Dicke im zentralen Teil von 1 mm auf. Sie waren auf beiden Seiten mit je einer Schar von parallelen, sich von Seite zu Seite um 90° kreuzenden Rippen versehen. Die Rippen hatten einen leichten Anzug und wiesen eine durchschnittliche Breite von 2 mm und eine Höhe von 3 mm auf. Ihr Mittenabstand betrug 10 mm. Die Sauerstoffseite wurde mit einer 50 μm dicken oxydationsbeständigen Schicht aus mit $Sb_2O_3$ dotiertem $SnO_2$ belegt. Es wurden 21 Brennstoffzellen von ebenfalls quadratischen Abmessungen 100 mm x 100 mm hergestellt. Der Feststoffelektrolyt 1 bestand aus stabilisiertem $ZrO_2$ und hatte eine Dicke von 100 μm. Die (positive) Sauerstoffelektrode 2 bestand aus einem La/Mn-Perowskit von 50 μm Dicke. Die (negative) Brennstoffelektrode 3 wurde aus einem Ni/$ZrO_2$-Cermet gefertigt. Nun wurde ein Stapel von total 21 Brennstoffzellen (1,2,3) und 20 Bipolarplatten 4 inklusive Endplatten 21 und 22 zusammengestellt und unter eine Achsialkraft von 100N gesetzt. Der Stapel wurde durch elektrische Leitungen 23 und 24 sowie durch Kanalwände 29,30,31 und 32 zur Führung der gasförmigen Medien ergänzt.

Die Erfindung ist nicht auf die Ausführungsbeispiele beschränkt. Die Anordnung von Brennstoffzellen auf der Basis eines Hochtemperatur-Feststoffelektrolyten aus stabilisiertem Zirkonoxyd zur Erzielung höchstmöglicher Leistung auf kleinstem Raum besteht darin, dass mehrere, je aus einem ebenen, flachen Blatt bestehende Brennstoffzellen-Elemente stapelartig aufeinandergeschichtet und elektrisch in Serie geschaltet sind, dergestalt, dass jeweils die Sauerstoffelektrode des einen Elements mit der Brennstoffelektrode des nächstfolgenden Elements durch ein elektrisch leitendes Bauelement verbunden ist. Dabei ist es vorteilhaft, dass auf ein Paket von je 10 bis 20 Elementen ein mechanischer Zwischenträger aus einem keramischen Material zur mechanischen Stützung folgt. Das elektrisch leitende Bauelement ist in Form einer Bipolarplatte aus metallischem, keramischem oder Cermet-Material vorgesehen. Die Bipolarplatte ist beidseitig mit -senkrecht zur Plattenebene gesehen - in einer Flucht liegenden Erhebungen in Form von Noppen oder Rippen versehen, wobei die auf diese Weise bedingten Hohlräume auf beiden Seiten der Bipolarplatte zwischen der letzteren und den beiden ungleichnamigen Elektroden benachbarter Brennstoffzellen Kanäle für die strömenden gasförmigen Medien bilden.

Die Bipolarplatte besteht in einer Ausführung aus einem metallischen Werkstoff ausgewählt aus einer Hochtemperatur-Nickellegierung oder einer Platinmetall-Legierung und ist als Blech mit Nieten oder als Presskörper oder als geschweisster Blechhohlkörper ausgebildet. In einer anderen Ausführung besteht die Bipolarplatte aus einem keramischen Werkstoff oder einem Cermet, ausgewählt aus einem elektrisch leitenden Karbid oder Perowskit oder Zirkonoxyd/Nickel-Cermet oder einer Kombination von mindestens zweien der vorgenannten Werkstoffe und ist als Presskörper oder als Presskörper mit einseitig aufgebrachter zusätzlicher Oberflächenschicht aus einem keramischen und/oder metallischen Material ausgebildet. Die Bipolarplatte weist sowohl auf der Brennstoffseite wie auf der Sauerstoffseite je 2 seitliche Begrenzungsleisten auf, wobei die Längsachsen der Leisten auf der Brennstoffseite zu den Längsachsen der Leisten auf der Sauerstoffseite senkrecht stehen, so dass für die gasförmigen Medien auf jeder Seite der Bipolarplatte ein Kanal gebildet wird, dergestalt, dass sich die Längsachsen und somit die Strömungsrichtungen der beiden Kanäle in einem Winkel von 90° kreuzen.

Die Anordnung der Brennstoffzellen erfolgt dergestalt, dass der abwechslungsweise aus flachen Brennstoffzellen und elektrisch leitenden Bauelementen in Form von Bipolarplatten bestehende Stapel von nach dem Kreuzstromprinzip angeordneten Kanälen für die Zuführung des gasförmigen Sauerstoffträgers und des gasförmigen Brennstoffes sowie für die Abführung des Ueberschusses des gasförmigen Sauerstoffträgers und des Ballastgases und die Abführung des Ueberschusses des Brennstoffes und der gasförmigen Reaktionsprodukte umkleidet ist und eine sauerstoffseitige und eine brennstoffseitige Endplatte mit je einer elektrischen Leitung zur positiven und negativen Klemme vorgesehen ist. Im grösseren Verband ist eine Vielzahl von Plattenstapeln mit Brennstoffzellen und Bipolarplatten derart mit ihren auf den Plattenebenen senkrecht stehenden Längsachsen parallel und vertikal nebeneinander aufgestellt, dass deren Grundriss eine quadratische schachbrettartige Manier von Plattenstapeln und dazwischenliegenden Kanälen für die gasförmigen Medien oder eine Manier von ungleichseitigen achteckigen Plattenstapeln und dazwischenliegenden ungleich grossen quadratischen Kanalquerschnitten für den Sauerstoffträger und den Brennstoff bildet. Die Brennstoffzellen und die dazwischen liegenden elektrisch leitenden Bauelemente sind vorteilhafterweise durch eine gemeinsame Sinterung miteinander fest verbunden.

.

## Ansprüche

1. Anordnung von Brennstoffzellen auf der Basis eines Hochtemperatur-Feststoffelektrolyten aus stabilisiertem Zirkonoxyd zur Erzielung höchstmöglicher Leistung auf kleinstem Raum, dadurch gekennzeichnet, dass mehrere, je aus einem ebenen, flachen Blatt bestehende Brennstoffzellen-Elemente(1;2;3) stapelartig aufeinandergeschichtet und elektrisch in Serie geschaltet sind, dergestalt, dass jeweils die Sauerstoffelektrode(2) des einen Elements mit der Brennstoffelektrode(3) des nächstfolgenden Elements durch ein elektrisch leitendes Bauelement(4) verbunden ist.

2. Anordnung von Brennstoffzellen nach Anspruch 1, dadurch gekennzeichnet, dass auf ein Paket von je 10 bis 20 Elementen ein mechanischer Zwischenträger aus einem keramischen Material folgt.

3. Anordnung von Brennstoffzellen nach Anspruch 1, dadurch gekennzeichnet, dass zwischen je zwei benachbarten Brennstoffzellen-Elementen je ein elektrisch leitendes Bauelement in Form einer Bipolarplatte(4) aus metallischem, keramischem oder Cermet-Material vorgesehen ist.

4. Anordnung von Brennstoffzellen nach Anspruch 3, dadurch gekennzeichnet, dass die Bipolarplatte(4) beidseitig mit - senkrecht zur Plattenebene gesehen - in einer Flucht liegenden Erhebungen in Form von Noppen(11) oder Rippen versehen ist, und dass durch die auf diese Weise bedingten Hohlräume auf beiden Seiten der Bipolarplatte zwischen der letzteren und den beiden ungleichnamigen Elektroden(2;3) benachbarter Brennstoffzellen Kanäle für die strömenden gasförmigen Medien vorhanden sind

5. Anordnung von Brennstoffzellen nach Anspruch 4, dadurch gekennzeichnet, dass die Bipolarplatte(4) aus einem metallischen Werkstoff ausgewählt aus einer Hochtemperatur-Nickellegierung oder einer Platinmetall-Legierung besteht und als Blech(9) mit Nieten(10) oder als Presskörper oder als geschweisster Blechhohlkörper(12;13) ausgebildet ist.

6. Anordnung von Brennstoffzellen nach Anspruch 4, dadurch gekennzeichnet, dass die Bipolarplatte (4) aus einem keramischen Werkstoff oder einem Cermet ausgewählt aus einem elektrisch leitenden Karbid oder Perowskit oder Zirkonoxyd/Nickel-Cermet oder einer Kombination von mindestens zweien der vorgenannten Werkstoffe besteht und als Presskörper oder als Presskörper (15;17) mit einseitig aufgebrachter zusätzlicher Oberflächenschicht (16;12) aus einem keramischen und/oder metallischen Material ausgebildet ist.

7. Anordnung von Brennstoffzellen nach Anspruch 3, dadurch gekennzeichnet, dass die Bipolarplatte (4) sowohl auf der Brennstoffseite wie auf der Sauerstoffseite je 2 seitliche Begrenzungsleisten (19;20) aufweist, wobei die Längsachsen der Leisten (19) auf der Brennstoffseite zu den Längsachsen der Leisten (20) auf der Sauerstoffseite senkrecht stehen, so dass für die gasförmigen Medien auf jeder Seite der Bipolarplatte (4) ein Kanal gebildet wird, dergestalt, dass sich die Längsachsen und somit die Strömungsrichtungen der beiden Kanäle in einem Winkel von 90° kreuzen.

8. Anordnung von Brennstoffzellen nach Anspruch 1, dadurch gekennzeichnet, dass der abwechslungsweise aus flachen Brennstoffzellen und elektrisch leitenden Bauelementen in Form von Bipolarplatten (4) bestehende Stapel von nach dem Kreuzstromprinzip angeordneten Kanälen für die Zuführung des gasförmigen Sauerstoffträgers (25) und des gasförmigen Brennstoffes (27) sowie für die Abführung des Ueberschusses des gasförmigen Sauerstoffträgers und des Ballastgases (26) und die Abführung des Ueberschusses des Brennstoffes und der gasförmigen Reaktionsprodukte (28) umkleidet ist, und dass eine sauerstoffseitige und eine brennstoffseitige Endplatte (21;22) mit je einer elektrischen Leitung (23;24) zur positiven und negativen Klemme vorgesehen ist.

9. Anordnung von Brennstoffzellen nach Anspruch 8, dadurch gekennzeichnet, dass eine Vielzahl von Plattenstapeln (33) mit Brennstoffzellen und Bipolarplatten derart mit ihren auf den Plattenebenen senkrecht stehenden Längsachsen parallel und Plattenebenen senkrecht stehenden Längsachsen parallel und vertikal nebeneinander aufgestellt ist, dass deren Grundriss eine quadratische schachbrettartige Manier von Plattenstapeln (33) und dazwischenliegenden Kanälen (34;35;36;37) für die gasförmigen Medien oder eine Manier von ungleichseitigen achteckigen Plattenstapeln und dazwischenliegenden ungleich grossen quadratischen Kanalquerschnitten für den Sauerstoffträger (34) und den Brennstoff (36)bildet.

10. Anordnung von Brennstoffzellen nach Anspruch 1, dadurch gekennzeichnet, dass die Brennstoffzellen und die dazwischenliegenden elektrisch leitenden Bauelemente durch eine gemeinsame Sinterung miteinander fest verbunden sind.

FIG.1

FIG.2

FIG.3

FIG.4

89/005

# FIG.5

13  13  12

12

} 4

# FIG.6

14

} 4

# FIG.7

15

16

} 4

# FIG.8

12

17

} 4

# FIG.9

# FIG.10

89/005

FIG.11

FIG.12

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl⁴) |
|---|---|---|---|
| A | GB - A - 2 148 045 <br> (US DEPARTMENT OF ENERGY) <br> * Zusammenfassung; Fig. 1 * <br> -- | 1 | H 01 M 8/12 <br> H 01 M 8/24 |
| A | US - A - 4 463 065 <br> (HEGEDUS et al.) <br> * Zusammenfassung; Fig. 3,4 * <br> -- | 1 | |
| P,A | GB - A - 2 219 125 <br> (THE ENGLISH ELECTRIC) <br> * Zusammenfassung ; Fig. 1 * <br> ---- | 1 | |

RECHERCHIERTE
SACHGEBIETE (Int Cl⁴)

H 01 M

Der vorliegende Recherchenbericht wurde für alle Patentansprüche erstellt.

| Recherchenort | Abschlußdatum der Recherche | Prüfer |
|---|---|---|
| WIEN | 06-04-1990 | LUX |